# EUROPÄISCHE PATENTSCHRIFT

(11) **EP 0 698 747 B1**
(45) Veröffentlichungstag und Bekanntmachung des Hinweises auf die Patenterteilung: **23.09.1998**
(21) Anmeldenummer: 95109887.0
(22) Anmeldetag: 24.06.1995
(51) Int. Cl.: F16D 3/76, F16F 15/136

(54) **Drehelastische Kupplung mit integriertem Torsionsschwingungsdämpfer**
Rotational flexible coupling with integrated torsional damper
Accouplement élastique en rotation avec amortisseur de torsion intégré

(30) Priorität: 26.08.1994 DE 4430393
(43) Veröffentlichungstag der Anmeldung: 28.02.1996
(73) Patentinhaber: Firma Carl Freudenberg, 69469 Weinheim (DE)
(72) Erfinder: Barsch, Peter, Dr., D-79424 Auggen (DE); Ullrich, Günter, D-69502 Hemsbach (DE); Aufderheide, Uwe, D-79424 Auggen (DE)

(56) Entgegenhaltungen:
- EP-A- 0 621 413
- DE-A- 1 425 297
- DE-A- 4 018 596
- DE-A- 4 328 613
- DE-C- 4 404 311
- GB-A- 1 066 735

## Beschreibung

Die Erfindung betrifft eine drehelastische Kupplung mit einem integrierten Torsionsschwingungsdämpfer, wobei der Torsionsschwingungsdämpfer einen Schwungring und einen Nabenring umfaßt, die durch einen ersten Federkörper aus elastomerem Werkstoff zur Dämpfung von Torsionsschwingungen verbunden sind, wobei die Kupplung und der Torsionsschwingungsdämpfer in einer funktionstechnischen Reihenschaltung angeordnet sind.

Eine solche Kupplung mit integriertem Torsionsschwingungsdämpfer ist aus der DE-A-40 18 596 bekannt. Die Kupplung und der Torsionsschwingungsdämpfer sind in einer funktionstechnischen Parallelschaltung angeordnet. Die drehelastische Kupplung besteht aus einer Riemenscheibe, die durch ein Rillenkugellager auf einem Nabenring abgestützt ist. Der Nabenring ist mit einem U-förmigen Ring drehfest verbunden, wobei die Riemenscheibe durch einen Federkörper drehelastisch mit dem Ring verbunden ist. Radial außenseitig ist der Ring von einem Schwungring des Torsionsschwingungsdämpfers unter Zwischenfügung eines weiteren Federkörpers umschlossen. Das vorbekannte Bauteil weist gute Gebrauchseigenschaften und geringe Abmessungen in axialer Richtung auf.

Aus der GB-B-1 066 735 ist weiterhin ein in Drehschwingungsdämpfer insbesondere zur Dämpfung von Drehschwingungen von Kurbelwellen bekannt, der in Reihe geschaltete Schwungringe aufweist, die untereinander elastisch verbunden sind. Dabei können die Schwungringe als Riemenscheiben ausgebildet sein, was im Sinne der Erfindung einer Kupplung entspricht. Nachteilig ist hierbei, daß die Riemenscheibe wegen der elastischen Dämpfungsschicht radialen und axialen Relativverlagerungen ausgesetzt sein kann, wodurch die genaue Führung des Riemens erschwert und die Gebrauchsdauer insgesamt verringert wird.

Der Erfindung liegt die Aufgabe zugrunde, eine Kupplung mit integriertem Torsionsschwingungsdämpfer der vorbekannten Art derart weiterzuentwickeln, daß diese einen einfachen, aus wenigen Einzelteilen bestehenden Aufbau aufweist, in fertigungstechnischer und wirtschaftlicher Hinsicht kostengünstig herstellbar ist und gute Gebrauchseigenschaften aufweist.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Im Rahmen der vorliegenden Erfindung ist es vorgesehen, daß die Kupplung und der Torsionsschwingungsdämpfer in einer funktionstechnischen Reihenschaltung angeordnet sind. Der erste Federkörper und der Schwungring sind derart aufeinander abgestimmt, daß Torsionsschwingungen der Kurbelwelle einer Verbrennungskraftmaschine wirkungsvoll gedämpft werden. Die in den Torsionsschwingungsdämpfer eingeleiteten Torsionsschwingungen können beispielsweise eine Frequenz von 300 bis 400 Hz aufweisen. Der einfache, teilearme Aufbau der Kupplung mit integriertem Torsionsschwingungsdämpfer wird dadurch erzielt, daß die relativ torsionsweiche, Drehmomente übertragende Kupplung keinen separat erzeugten Nabenring benötigt, sondern im wesentlichen nur aus zwei Einzelteilen besteht, die durch den zweiten Federkörper und eine Riemenscheibe gebildet sind. Der Schwungring des wesentlich steiferen Torsionsschwingungsdämpfers bildet gleichzeitig den Innenring der Kupplung, wobei der zweite Federkörper zur Schwingungsentkopplung der Riemenscheibe von der Kurbelwelle vorgesehen ist.

Die Kupplung weist einen zweiten Federkörper zur Entkopplung von den Torsionsschwingungen auf, wobei der zweite Federkörper die Riemenscheibe der Kupplung mit dem Schwungring des Torsionsschwingungsdämpfers verbindet. Gemäß einer vorteilhaften Ausgestaltung kann es vorgesehen sein, daß die Riemenscheibe den Schwungring mit radialem Abstand außenseitig umschließt und daß in dem durch den Abstand gebildeten Spalt der zweite Federkörper angeordnet ist. Der zweite Federkörper besteht bevorzugt aus elastomerem Werkstoff. Im Hinblick auf eine einfache, kostengünstige Herstellung und gute Gebrauchseigenschaften während der gesamten Gebrauchsdauer, können der erste Federkörper und der zweite Federkörper gleichzeitig vulkanisiert werden, so daß ein kompletter Fertigungsschritt entfällt.

Die Riemenscheibe, die bevorzugt zum Antrieb von Nebenaggregaten ausgebildet ist, kann beispielsweise Poly-V-Riemen oder Zahnriemen aufnehmen.

Die Riemenscheibe kann zur Vermeidung radialer und axialer Relativverlagerungen durch einen Stützring geführt sein, wobei der Stützring und der Schwungring bevorzugt drehfest miteinander verbunden sind. Hierbei ist von Vorteil, daß eine stets übereinstimmende Zuordnung von Schwungring und Riemenscheibe in radialer und axialer Richtung relativ zueinander sichergestellt ist und gebrauchsdauerverringernde Zug- und Schubspannungen innerhalb des zweiten Federkörpers vermieden werden. Dadurch, daß der Schwungring des Torsionsschwingungsdämpfers in radialer Richtung vergleichsweise weit innen angeordnet ist, kann durch die einstückige Ausgestaltung des Stützrings mit dem Schwungring eine Vergrößerung des Massenträgheitsmoments bewirkt werden, was im Hinblick auf eine effiziente Schwingungsdämpfung von Vorteil ist. Nach einer anderen Ausgestaltung kann der Stützring mit dem Nabenring drehfest verbunden sein.

Der Stützring kann einen in axialer Richtung offenen, im wesentlichen C-förmigen Querschnitt aufweisen und mit seinem Axialvorsprung in einer kongruent geformten Ausnehmung der Riemenscheibe relativ verdrehbar angeordnet sein. Die Lagerung erfolgt dabei vorzugsweise sowohl in radialer als auch in axialer Richtung, wobei der Stützring und der Außenring bevorzugt durch ein Gleitlager aufeinander abgestützt sind. Hierbei ist von Vorteil, daß durch die Gleitlagerung die Ausdehnung des Außenrings in radialer Richtung auf ein Minimum begrenzt ist, so daß auch Außenringe mit vergleichsweise kleinen Außendurchmessern als Riemenscheiben zur Anwendung gelangen können. Die Relativbeweglichkeit des Außenrings in Umfangsrichtung, bezogen auf den Schwungring des Torsionsschwingungsdämpfers, erfolgt bei Verwendung von Wälzlagern mit relativ verringerter Reibung. Das Wälzlager weist sehr gute Gebrauchseigenschaften während einer außerordentlich langen Gebrauchsdauer auf. Eine gute, nahezu reibungsfreie Relativbeweglichkeit der Riemenscheibe, bezogen auf den Stützring, ist bei der Schwingungsentkopplung des Außenrings vom Torsionsschwingungsdämpfer von ausschlaggebender Bedeutung. Auch im Hinblick auf die sehr geringe Federsteifigkeit des zweiten Federkörpers ist die Lagerung der Riemenscheibe auf einem Stützring von Vorteil.

Der erste und der zweite Federkörper können aus voneinander abweichenden Werkstoffen bestehen und/oder eine voneinander abweichende Gestalt aufweisen, wobei der erste Federkörper im Querschnitt betrachtet im wesentlichen rechteckig ausgebildet ist und der zweite Federkörper einen im wesentlichen trapezförmigen Querschnitt aufweist. Die frequenzmäßig deutlich unterschiedlichen Wirkbereiche des ersten und des zweiten Federkörpers werden genutzt, indem die niederfrequent wirksame, torsionsweiche Kupplung in Reihe hinter dem hochfrequent wirksamen, relativ steiferen Torsionsschwingungsdämpfer angeordnet ist.

Das Verhältnis aus radial wirksamer Dicke zu größter axial wirksamer Ausdehnung des zweiten Federkörpers kann, im Querschnitt betrachtet, zumindest 0,5 betragen. Um eine geringe Federsteifigkeit des zweiten Federkörpers zu erzielen, hat sich ein derartiges Verhältnis in Verbindung mit einer geeigneten Werkstoffauswahl für die meisten Anwendungsfälle vorteilhaft bewährt.

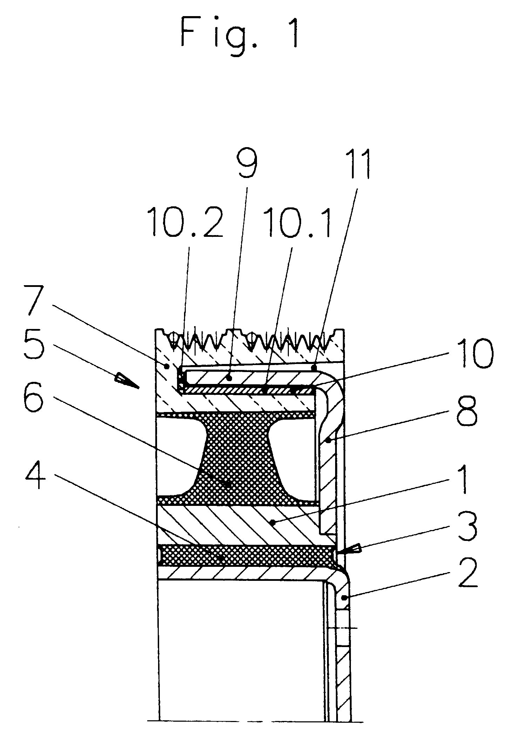

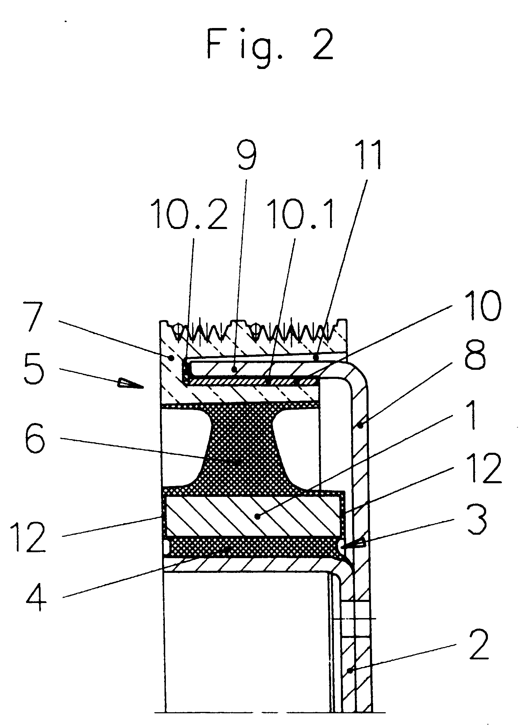

Zwei Ausführungsbeispiele der erfindungsgemäßen Torsionsschwingungsdämpfer werden im folgenden anhand der Fig. 1 und 2 weiter erläutert.

In Fig. 1 sind die beiden Federkörper separat erzeugt, und der Stützring und der Schwungring sind drehfest miteinander verbunden.

In Fig. 2 sind die beiden Federkörper einstückig ineinanderübergehend ausgebildet und umschließen den Schwungring, wobei der Stützring und der Nabenring relativ verdrehbar miteinander verbunden sind.

In den Fig. 1 und 2 ist jeweils eine drehelastische Kupplung 5 mit einem integrierten Torsionsschwingungsdämpfer gezeigt. Zum Dämpfen von Torsionsschwingungen einer Kurbelwelle einer Verbrennungskraftmaschine, in diesem Beispiel im Bereich von 300 bis 400 Hz, sind der Schwungring 1 und der Nabenring 2 durch einen ersten Federkörper 4 drehelastisch aufeinander abgestützt. Der innerhalb des Spalts 3 angeordnete erste Federkörper 4 ist - im Querschnitt betrachtet - im wesentlichen rechteckig ausgeführt und weist ein Verhältnis aus radialer Dicke zu axialer Ausdehnung von 1:8 auf.

Die torsionsweiche Kupplung 5 ist in einer funktionstechnischen Reihenschaltung hinter dem wesentlichen torsionssteiferen Torsionsschwingungsdämpfer angeordnet. Die einstückige Ausgestaltung des Torsionsschwingungsdämpfers mit der Kupplung 5 bewirkt einen teilearmen, einfachen Aufbau, da der Schwungring 1 des Torsionsschwingungsdämpfers gleichzeitig den Innenring der Kupplung 5 bildet. Der zweite Federkörper 6 ist - im Querschnitt betrachtet - im wesentlichen trapezförmig ausgebildet und verbindet die Riemenscheibe 7 der Kupplung 5 mit dem Schwungring 1 des Torsionsschwingungsdämpfers.

Durch die unterschiedlichen Zielrichtungen, einerseits Dämpfung von höherfrequenten Schwingungen, beispielsweise der Kurbelwelle eines Kraftfahrzeugs, durch den Torsionsschwingungsdämpfer und andererseits möglichst weitgehende Schwingungsentkopplung der Riemenscheibe 7 vom Torsionsschwingungsdämpfer, ist es in diesem Beispiel vorgesehen, daß der erste und der zweite Federkörper 4, 6 aus Werkstoffen mit unterschiedlichen Steifigkeiten bestehen und eine voneinander abweichende Gestalt aufweisen. Das Verhältnis aus radialer Höhe des zweiten Federkörpers 6 zu dessen maximaler axialer Ausdehnung beträgt in diesem Beispiel 0,7.

Um gebrauchsdauerverringende Deformierungen des zweiten Federkörpers 6 zu vermeiden und daraus resultierende nachteilige Gebrauchseigenschaften, ist ein Stützring 8 vorgesehen.

In Fig. 1 ist der Stützring 8 relativ unbeweglich mit dem Schwungring 1 ausgeführt. In diesem Beispiel ist der Stützring 8 durch Laserschweißen mit dem Schwungring verbunden. Im Hinblick auf ein möglichst großes Massenträgheitsmoment, ist die Anbindung des Stützrings 8 an den Schwungring 1 von Vorteil. Die für die Dämpfung der Torsionsschwingungen wirksame Trägheitsmasse setzt sich in dem hier gezeigten Ausführungsbeispiel aus der Masse des Schwungrings 1 und der Masse des Stützrings 8 zusammen. Die Riemenscheibe 7 weist eine in axialer Richtung offene, im wesentlichen C-förmige Ausnehmung 11 auf, in der der Axialvorsprung 9 des Stützrings 8 angeordnet ist. Um eine gute Relativvedrehbarkeit des Stützrings 8 bezogen auf die Riemenscheibe 7 sicherzustellen, ist ein Gleitlager 10 vorgesehen, das in diesem Ausführungsbeispiel zweiteilig ausgebildet ist. Das zweiteilige Gleitlager 10.1, 10.2 ist als Radial- und Axiallager ausgeführt. Das Radiallager 10.1 ist am Innenumfang des Axialvorsprungs 9 und der radial inneren Begrenzung der Ausnehmung 11 der Riemenscheibe 7 angeordnet. Das Axiallager 10.2 berührt in axialer Richtung einerseits die Stirnseite des Axialvorsprungs 9 und in axialer Richtung andererseits den Nutgrund der nutförmigen Ausnehmung 11. Die Verwendung von Gleitlagern ist hinsichtlich einer kostengünstigen Herstellbarkeit der drehelastischen Kupplung mit integriertem Torsionsschwingungsdämpfer von Vorteil.

In Fig. 2 ist eine drehelastische Kupplung 5 mit integriertem Torsionsschwingungsdämpfer, ähnlich dem Bauteil aus Fig. 1 gezeigt. Der Stützring 8 ist in diesem Beispiel mit dem Nabenring 2 des Torsionsschwingungsdämpfers drehfest verbunden. Der erste und der zweite Federkörper 4, 6 sind einstückig ineinanderübergehend ausgebildet und umschließen den Schwungring 1 mit einem Gummiüberlauf 12. Durch die gleichzeitige Vulkanisation der beiden Federkörper 4, 6 in die Kupplung 5 und den Torsionsschwingungsdämpfer, kann im Vergleich zu dem Ausführungsbeispiel aus Fig. 1 ein kompletter Fertigungsschritt entfallen.

In den hier gezeigten Ausführungsbeispielen sind die beiden Federkörper 4, 6 jeweils mit den angrenzenden Metallteilen vulkanisiert, wobei der Nabenring 2 des Torsionsschwingungsdämpfers im Anschluß an die Vulkanisation in radialer Richtung nach außen aufgeweitet ist, um eine Druckvorspannung innerhalb des ersten Federkörpers 4 zu erzeugen. Gebrauchdauerverringernde Zugspannungen sind dadurch ausgeschlossen. Das gesamte erfindungsgemäße Bauteil weist gleichbleibend gute Gebrauchseigenschaft während einer langen Gebrauchsdauer auf.

## Patentansprüche

1. Drehelastische Kupplung mit einem integrierten Torsionsschwingungsdämpfer, wobei der Torsionsschwingungsdämpfer einen Schwungring (1) und einen Nabenring (2) umfaßt, die durch einen ersten Federkörper (4) aus elastomerem Werkstoff zur Dämpfung von Torsionsschwingungen verbunden sind und die Kupplung (5) eine Riemenscheibe (7) aufweist, wobei die Kupplung (5) und der Torsionsschwingungsdämpfer (1, 2, 4) in einer funktionstechnischen Reihenschaltung angeordnet sind, **dadurch gekennzeichnet, daß** die Riemenscheibe (7) zur Vermeidung radialer und axialer Relativverlagerungen durch einen Stützring (8) geführt ist und daß die Riemenscheibe (7) eine in axialer Richtung offene Ausnehmung (11) mit im wesentlichen C-förmigem Querschnitt aufweist, in der der Stützring (8) mit einem Axialvorsprung (9) relativ verdrehbar angeordnet ist.

2. Kupplung mit integriertem Torsionsschwingungsdämpfer nach Anspruch 1, dadurch gekennzeichnet, daß der Stützring (8) und der Schwungring (1) drehfest miteinander verbunden sind.

3. Kupplung mit integriertem Torsionsschwingungsdämpfer nach Anspruch 1 oder 2, dadurch gekennzeichnet, daß der Stützring (8) und die Riemenscheibe (7) durch ein Gleitlager (10) aufeinander abgestützt sind.

4. Kupplung mit integriertem Torsionsschwingungsdämpfer nach einem der Ansprüche 1 bis 3, dadurch gekennzeichnet, daß die Kupplung (5) einen zweiten Federkörper (6) zur Entkopplung von den Torsionsschwingungen aufweist, der eine Riemenscheibe (7) der Kupplung mit dem Schwungring (1) des Torsionsschwingungsdämpfers verbindet.

5. Kupplung mit integriertem Torsionsschwingungsdämpfer nach Anspruch 4, dadurch gekennzeichnet, daß die Riemenscheibe (7) den Schwungring (1) mit radialem Abstand außenseitig umschließt und daß in dem durch den Abstand gebildeten Spalt der zweite Federkörper (6) angeordnet ist.

6. Kupplung mit integriertem Torsionsschwingungsdämpfer nach Anspruch 4 oder 5, dadurch gekennzeichnet, daß der zweite Federkörper (6) aus elastomerem Werkstoff besteht.

7. Kupplung mit integriertem Torsionsschwingungsdämpfer nach einem der Ansprüche 4 bis 6, dadurch gekennzeichnet, daß der erste und der zweite Federkörper (4, 6) aus voneinander abweichenden Werkstoffen bestehen und/oder eine voneinander abweichende Gestalt aufweisen, daß der erste Federkörper (4), im Querschnitt betrachtet, im wesentlichen rechteckig ausgebildet ist und daß der zweite Federkörper (6) einen im wesentlichen trapez förmigen Querschnitt aufweist.

8. Kupplung mit integriertem Torsionsschwingungsdämpfer nach Anspruch 7, dadurch gekennzeichnet, daß das Verhältnis aus radial wirksamer Dicke zu größter axial wirksamer Ausdehnung des zweiten Federkörpers (6), im Querschnitt betrachtet, zumindest 0,5 beträgt.

## Claims

1. A torsionally elastic coupling with an integrated torsional vibration damper, the torsional vibration damper comprising a flywheel ring (1) and a hub ring (2), which are connected by means of a first spring element (4) made of elastomer material for damping torsional vibrations, and the coupling (5) having a belt pulley (7), the coupling (5) and the torsional vibration damper (1, 2, 4) being arranged in a functional series connection, characterised in that the belt pulley (7) is guided by means of a supporting ring (8) to avoid radial and axial relative displacements, and in that the belt pulley (7) has a recess (11) which is open in the axial direction and has an essentially C-shaped cross-section in which the supporting ring (8) is arranged with an axial projection (9) so as to be relatively displaceable.

2. A coupling with an integrated torsional vibration damper according to claim 1, characterised in that the supporting ring (8) and the flywheel ring (1) are connected to one another so as to be fixed against rotation.

3. A coupling with an integrated torsional vibration damper according to either of claims 1 or 2, characterised in that the supporting ring (8) and the belt pulley (7) are supported one on the other by means of a plain bearing (10).

4. A coupling with an integrated torsional vibration damper according to any one of claims 1 to 3, characterised in that the coupling (5) has a second spring element (6) for decoupling from the torsional vibrations, which spring element connects a belt pulley (7) of the coupling to the flywheel ring (1) of the torsional vibration damper.

5. A coupling with an integrated torsional vibration damper according to claim 4, characterized in that the belt pulley (7) surrounds the flywheel ring (1) on the outside with radial spacing, and in that the second spring element (6) is arranged in the gap formed by the spacing.

6. A coupling with an integrated torsional vibration damper according to either of claims 4 or 5, characterized in that the second spring element (6) consists of elastomer material.

7. A coupling with an integrated torsional vibration damper according to any one of claims 4 to 6, characterized in that the first and second spring elements (4, 6) consist of differing materials and/or differ in shape from one another, in that the first spring element (4), viewed in cross-section, is essentially of rectangular shape, and in that the second spring element (6) has an essentially trapezoidal cross-section.

8. A coupling with an integrated torsional vibration damper according to claim 7, characterized in that the ratio of the radially effective thickness to the greatest axially effective extent of the second spring element (6), viewed in cross-section, is at least 0.5.

## Revendications

1. Accouplement élastique en rotation avec amortisseur de torsion intégré, l'amortisseur de torsion comprenant une bague volante (1) et une frette de roue (2) qui sont reliées par un premier corps élastique (4) en matière élastomère destiné à l'amortissement des oscillations de torsion et l'accouplement (5) comprenant une poulie (7), l'accouplement (5) et l'amortisseur de torsion (1, 2, 4) étant situés dans un montage en série en ce qui concerne leur fonction, caractérisé en ce que la poulie (7) est guidée par une bague d'appui (8) afin d'éviter les déplacements relatifs dans les directions radiale et axiale, et en ce que la poulie (7) est pourvue d'un évidement (11) ouvert dans la direction axiale et dont la section transversale a essentiellement une forme en C, dans lequel la bague d'appui (8) est située, avec une saillie axiale (9), d'une manière permettant une torsion relative.

2. Accouplement avec amortisseur de torsion intégré selon la revendication 1, caractérisé en ce que la bague d'appui (8) et la bague volante (1) sont reliées l'une à l'autre d'une manière empêchant la torsion.

3. Accouplement avec amortisseur de torsion intégré selon l'une des revendications 1 ou 2, caractérisé en ce que la bague d'appui (8) et la poulie (7) sont appuyées l'une sur l'autre par le biais d'un palier lisse (10).

4. Accouplement avec amortisseur de torsion intégré selon l'une des revendications 1 à 3, caractérisé en ce que l'accouplement (5) comprend un second corps élastique (6) servant au découplage des oscillations de torsion et qui relie une poulie (7) de l'accouplement à la bague volante (1) de l'amortisseur de torsion.

5. Accouplement avec amortisseur de torsion intégré selon la revendication 4, caractérisé en ce que la poulie (7) entoure la bague volante (1) avec une distance radiale sur son côté extérieur, et en ce que le second corps élastique (6) est situé dans la fente formée par la distance.

6. Accouplement avec amortisseur de torsion intégré selon l'une des revendications 4 ou 5, caractérisé en ce que le second corps élastique (6) est en matière élastomère.

7. Accouplement avec amortisseur de torsion intégré selon l'une des revendications 4 à 6, caractérisé en ce que le premier et le second corps élastiques (4, 6) sont formés de matières différentes l'une de l'autre et/ou ont une forme différente l'un par rapport à l'autre, en ce que le premier corps élastique (4), vu en coupe, est exécuté de manière essentiellement rectangulaire et en ce que le second corps élastique (6) a une section transversale essentiellement trapézoïdale.

8. Accouplement avec amortisseur de torsion intégré selon la revendication 7, caractérisé en ce que le rapport entre l'épaisseur active dans le sens radial et l'étendue active maximum dans le sens axial du second corps élastique (6), considérant sa section transversale, est égal à au moins 0,5.
